Europäisches Patentamt

European Patent Office

Office européen des brevets

(19)

(11) **EP 1 345 226 A1**

(12) **EUROPEAN PATENT APPLICATION**
published in accordance with Art. 158(3) EPC

(43) Date of publication:
**17.09.2003 Bulletin 2003/38**

(51) Int Cl.⁷: **G11B 21/21**

(21) Application number: **00987679.8**

(22) Date of filing: **20.12.2000**

(86) International application number:
**PCT/JP00/09081**

(87) International publication number:
**WO 02/050835 (27.06.2002 Gazette 2002/26)**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **FUJITSU LIMITED**
**Kawasaki-shi, Kanagawa 211-8588 (JP)**

(72) Inventor: **ISHIKAWA, Ren, Fujitsu Limited**
**Kawasaki-shi, Kanagawa 211-8588 (JP)**

(74) Representative: **Sunderland, James Harry**
**Haseltine Lake,**
**Imperial House,**
**15-19 Kingsway**
**London, WC 2W 6UD (GB)**

(54) **SUSPENSION AND DISK DEVICE**

(57) It is an exemplified object of the present invention to provide a suspension and a disc unit in which a head is less affected even when the rigid part of the suspension twists. The inventive, suspension includes a load beam that connects a head to a head arm, the head recording data onto and reproducing data from a disc, the head arm moving to position the head to a target position on the disc, the load beam compressing the head against the recordable medium with a certain compression force, a flexure that supports the head and a dimple as a projection that enables the load beam to point-contact the flexure, and the head to pitch and roll around the dimple, wherein the load beam includes a spring section that applies the compression force, a rigid section that extends from the spring section to a side opposite to the head arm, and is more rigid than the spring section in a direction that fluctuates a distance between the head arm and the disc; and a balancer section connected to the dimple and more elastic than the rigid section in the direction, the balancer section extending from the rigid section to a side of the rigid section opposite to the spring section.

FIG. 1

**Description**

TECHNICAL FIELD

The present invention relates generally to a mechanism for moving a head over a recordable medium, and more particularly to a structure of a suspension that supports the head. The present invention is suitable, for example, for a suspension that supports a magnetic head in a magnetic disc unit .

BACKGROUND TECHNOLOGY

Recent electronic apparatuses have been increasingly required to handle mass data, such as images and voices. A hard disc drive ("HDD") used for such electronic apparatuses is a typical mass auxiliary storage that provides random accesses as well as sequential accesses. The HDD typically includes a circular disc that attaches magnetic materials, a swingable head arm (or sometimes referred to as an actuator), a suspension connected to the head arm, and a magnetic head supported on the suspension. The magnetic head includes a minute head core that records and reproduces signals, and a slider that supports the head core. The arm is attached to a proximal end of the suspension, and the slider is attached to a distal end of the suspension. The suspension also serves as a flat spring that presses the slider against a disc with a certain compression force. When the disc stops, the slider contacts the disc due to the compression force by the suspension. When the disc rotates, the associative airflow occurs between the slider and the disc, and floats the slider from the disc surface. A balance between the floating force and the compression force spaces the floating slider from the disc at a certain distance from the disc. In this state, the arm rotates or seeks to move the magnetic head to a target position on the disc to access (i. e, read and write) the disc.

Winchester, known as a current HDD interface, is characterized, for example, in a medium fixation that cannot exchange a disc, a contact start stop ("CSS") that enables a head to contact a disc when the disc stops and to float the head from the disc when the disc rotates, and a decreased compression force by a suspension to reduce friction applied to the head at the time of start and stop. Stable recording and reproducing with this interface requires control over a constant head floating amount or improved resonance characteristic (or torsional vibration) of a head. The torsional vibration would offset a position of a head attached to the slider from a target position on the disc, and unstably vary an interval between the head and the disc, causing inaccessibility.

The conventional HDD typically uses a suspension and dynamic pressure fluid lubrication to control the flying height.

A distance between the disc and the head arm is called "Z height", and the suspension absorbs a fluctuation of a direction of the Z height, *i.e.*, direction Z. A Watlas type suspension as one typical suspension connects a rigid head to a rigid head arm through a flexure (also referred to as a gimbal or another name) and a load beam (also referred to as a load arm or another name). The suspension is a combination of the flexure and the load beam. The load beam includes a (flat) spring section only at its center to apply sufficient compression force in the direction Z. Therefore, the load beam includes a rigid section at its proximal end, the spring section at its center, and a rigid section at its distal end. Since the slider surface follows warp and swell on the disc and should be always parallel to the disc surface, the load beam contacts the flexure through a dimple (also referred to as pivot or another name), and the magnetic head is designed to softly pitch and roll around the dimple. Thus, the suspension is designed to be soft to Z-height fluctuations, pitching and rolling, and rigid to motions of other shafts. The resonance mode of the rigid section is torsional deformation at the proximal end of the load arm.

The dynamic pressure (fluid) lubrication arranges a head to form a cuneate or wedge aperture in the airflow associated with a rotation of is disc. Since the resonance frequency of an air film during floatation is larger, e.g., 20 to 40 kHz, than that of the suspension, the air film does not resonate prior to the suspension in principle. In addition, even when the air film vibrates, the recording frequency is remarkably larger, e.g., 1 to 15 MHz, than the resonance frequency, and the high-pass filter may easily eliminate the reproduction output oscillation generated from the air flow vibrations.

Conventional methods that minimize the torsional vibration include a method that makes the suspension strong to the torsional rigidity and increases the resonance frequency (see U.S. Patent No. 5,793 569), and a method that modifies a shape of the suspension to reduce the torsion (see U.S. Patents Nos. 6,023,574 and 5,991,122), and a method that provides a weight near the head to reduce the torsion at the resonance point (see Japanese Laid-Open Patent Application No. 56-117369).

DISCLOSURE OF THE INVENTION

However, a high seek speed associated with the recent mass storage of the hard disc remarkably increases influence of the torsional vibration on the conventional suspension. The torsional vibration occurs when the proximal end or rigid section of the suspension twists in a direction other than the direction Z and the twist propagates to the flexure although the proximal end does not deform in the direction Z. Even when the resonance frequency of the suspension increases as in the conventional proposals, the torsional vibration necessarily occurs at the resonance frequency. A method using a weight is effective to prevent twisting at the resonance point, but use of the weight would increase the number of components.

Accordingly, it is a general object of the present invention to provide a novel and useful suspension and disc unit in which the above disadvantages are eliminated.

Another exemplified and more specific object of the present invention is to provide a suspension and a disc unit in which a head is less affected even when the rigid part of the suspension twists.

In order to achieve the above objects, a suspension arm as one exemplified embodiment of the present invention includes a load beam that connects a head to a head arm, the head recording data onto and reproducing data from a disc, the head arm moving to position the head to a target position on the disc, the load beam compressing the head against the recordable medium with a certain compression force, a flexure that supports the head and a dimple as a projection that enables the load beam to point-contact the flexure, and the head to pitch and roll around the dimple, wherein the load beam includes a spring section that applies the compression force, a rigid section that extends from the spring section to a side opposite to the head arm, and is more rigid than the spring section in a direction that fluctuates a distance between the head arm and the disc, and a balancer section connected to the dimple and more elastic than the rigid section in the direction, the balancer section extending from the rigid section to a side of the rigid section opposite to the spring section. This Watlas type suspension uses the balancer section that is more elastic than the rigid section to absorb torsion generated in the rigid section, and does not propagate the torsion to the head supported by the balancer section. Optionally, the balancer section may be provided with a weight. This weight is provided approximately symmetrical to the head with respect to the balancer section, thereby securing weight balance of the balancer section and mechanically stabilizing the balancer section.

A suspension of another aspect of the present invention provides the above suspension with a preamp chip, connected to the load beam, which amplifies a signal to be sent to the head. This suspension may exhibit operations similar to those of the above suspension provided with the weight and may reduce influence of noises by arranging the head close to the preamp chip. Therefore, similar to the weight, the preamp chip may be provided approximately symmetrical to the head with respect to the balancer section. The suspension may further include wiring, such as an FPC, at a side of the load beam opposite to the disc, to electrically connect the preamp chip with the head, thereby securing weight balance of the balancer section and mechanically stabilizing the balancer section. In this case, the balancer section includes a through-hole, through which the wiring may be electrically connected to the head, thereby securing weight balancing and electrical connections between the head and the preamp chip.

A suspension of still another aspect of the present invention includes a load beam that connects a head to a head arm, the head recording data onto and reproducing data from a disc, the head arm moving the head to a target position on the disc, the load beam compressing the head against the disc with a certain compression force, a flexure that supports the head, a dimple as a projection that enables the load beam to flexure that supports the head a dimple as a projection that enables the load beam to point-contact the flexure, and the head to pitch and roll the dimple, and a preamp chip, connected to the load beam, which amplifies a signal to be sent to the head, wherein the preamp chip is located symmetrical to the head with respect to the load beam. This suspension has a short distance between the head and the preamp chip, and reduces the influence of noises.

A disc unit of still another aspect of the present invention includes a head that records data onto and reproduces data from a disc, a head arm that moves to position the head to a target position on the disc, and any of the above suspensions, connected to the head arm, which supports the head. This disc unit includes the above suspension, and exhibits similar operations.

BRIEF DESCRIPTION OF THE DRAWINGS

FIG. 1 is a schematic perspective view of a suspension of one embodiment according to the present invention.
FIG. 2 is an exploded perspective view of the suspension shown in FIG. 1.
FIG. 3 is a schematic plane view of the inside of a disc unit of another aspect according to the present invention, which includes the suspension shown in FIG. 1.
FIG. 4 is a schematic perspective view of a variation of the suspension shown in FIG. 1.
FIG. 5 is an exploded perspective view of the suspension shown in FIG. 4.
FIG. 6 is a view for explaining a function of a weight of the suspension shown in FIG. 4.
FIG. 7 is a graph that indicates a swinging degree of a head to the weight obtained by a finite element method analysis when the weight of the suspension shown in FIG. 4 moves in a direction $X_2$.
FIG. 8 is a schematic perspective view of a load beam as a variation of a load beam in the suspension shown in FIG. 4.

FIG. 9 is a view for explaining weight balancing of the balancer section when the load beam shown in FIG. 8 is applied to the suspension.

FIG. 10 is a graph that indicates a swinging degree of a head obtained by a finite element method analysis when the weight of the suspension shown in FIG. 4 moves in a direction $X_2$.

FIG. 11 is a schematic perspective view of a variation of the suspension shown in FIG. 1.

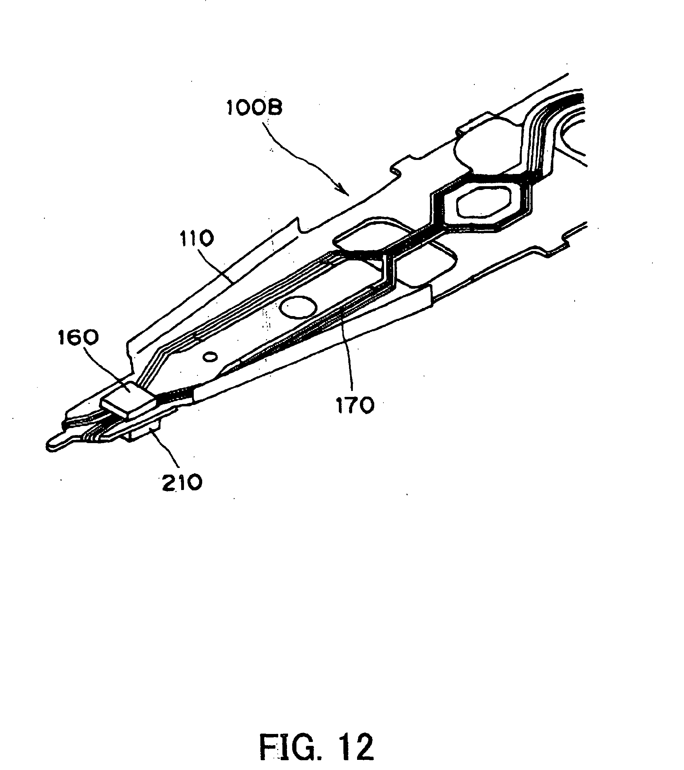

FIG. 12 is a schematic perspective view of a rear side of the suspension shown in FIG. 11.

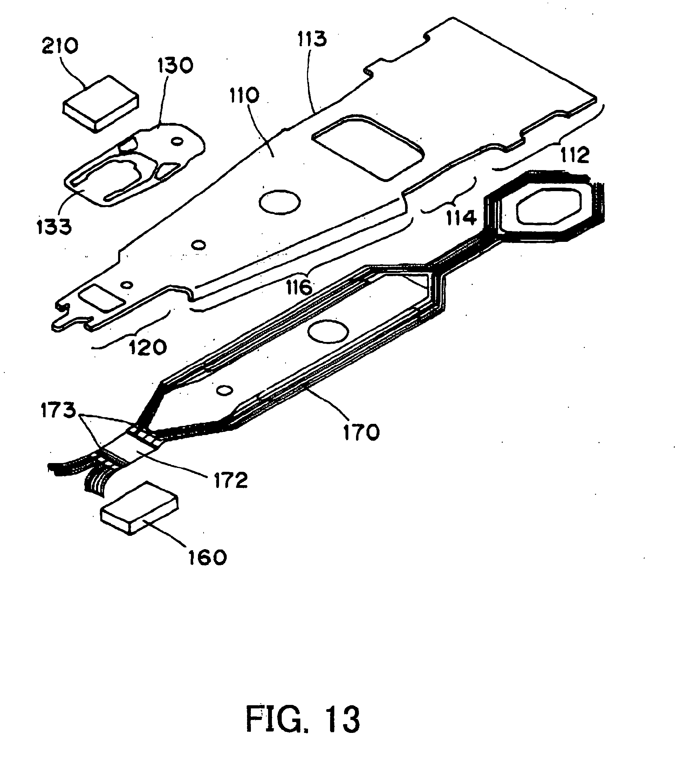

FIG. 13 is an exploded perspective view of the suspension shown in FIG. 11.

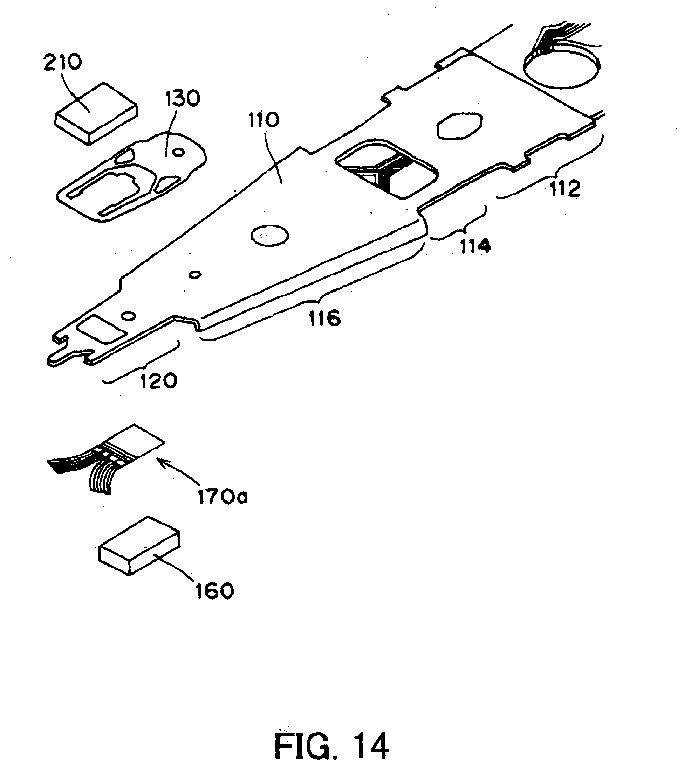

FIG. 14 is an exploded perspective view of a suspension as a variation of an FPC shown in FIG. 5.

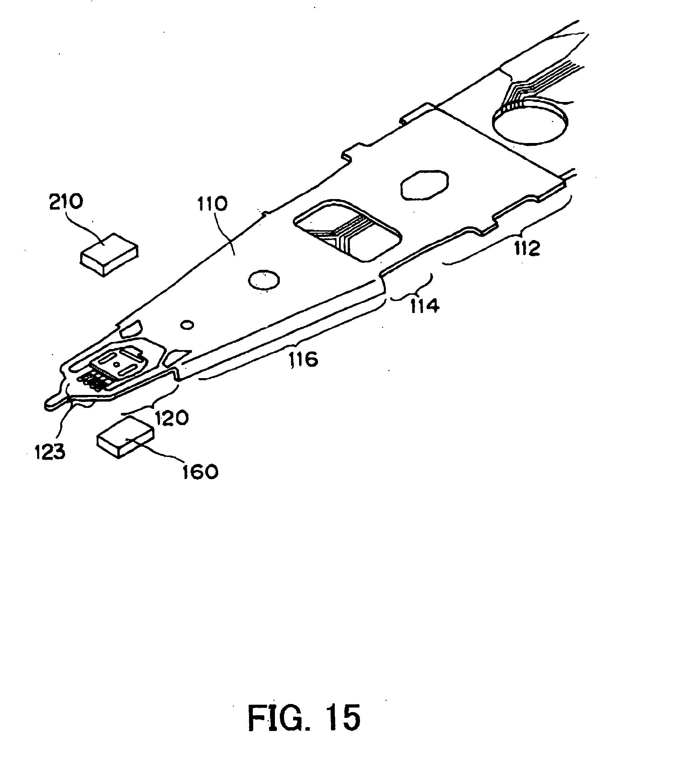

FIG. 15 is a schematic perspective view of the suspension shown in FIG. 11 that has a through-hole.

FIG. 16 is a view of a controller of the disc unit shown in FIG. 3.


BEST MODE FOR IMPLEMENTING THE INVENTION

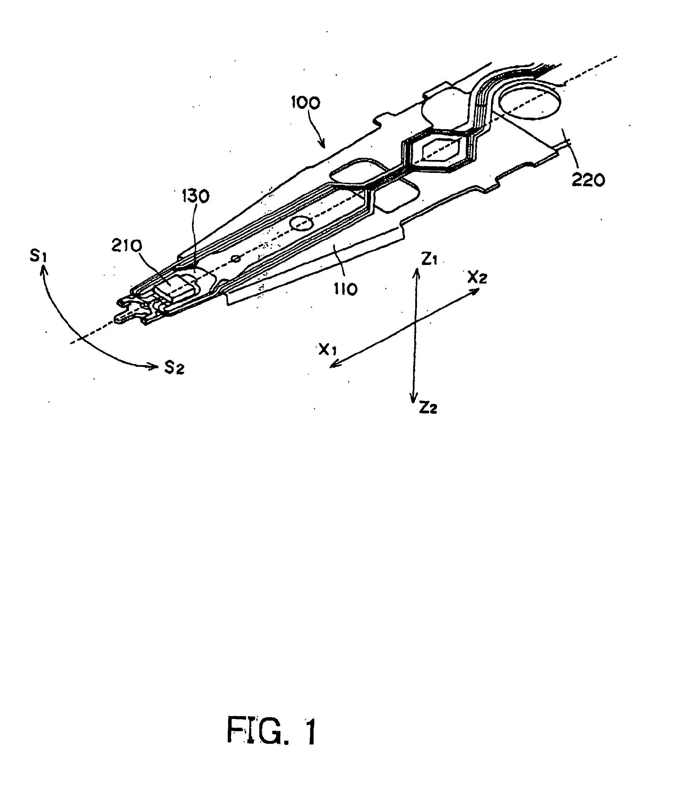

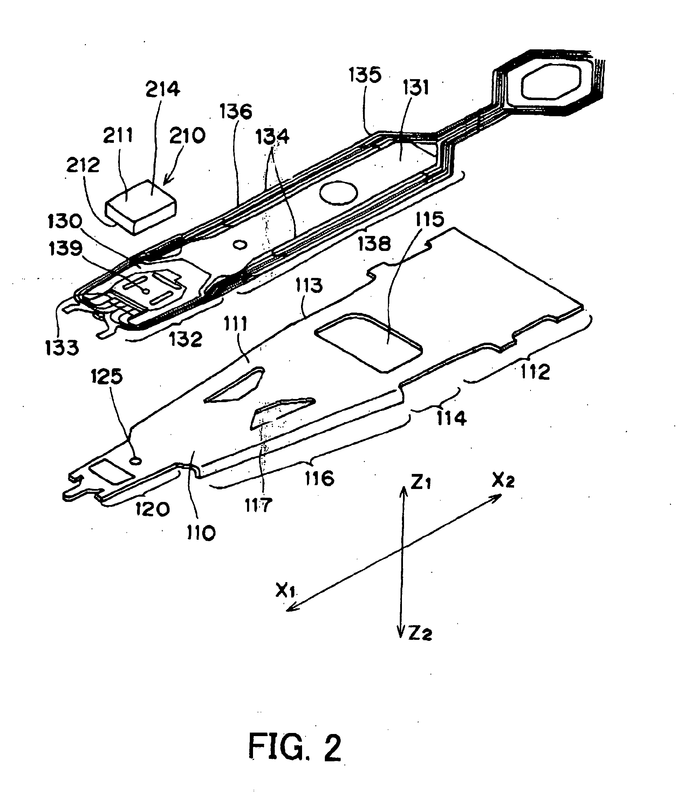

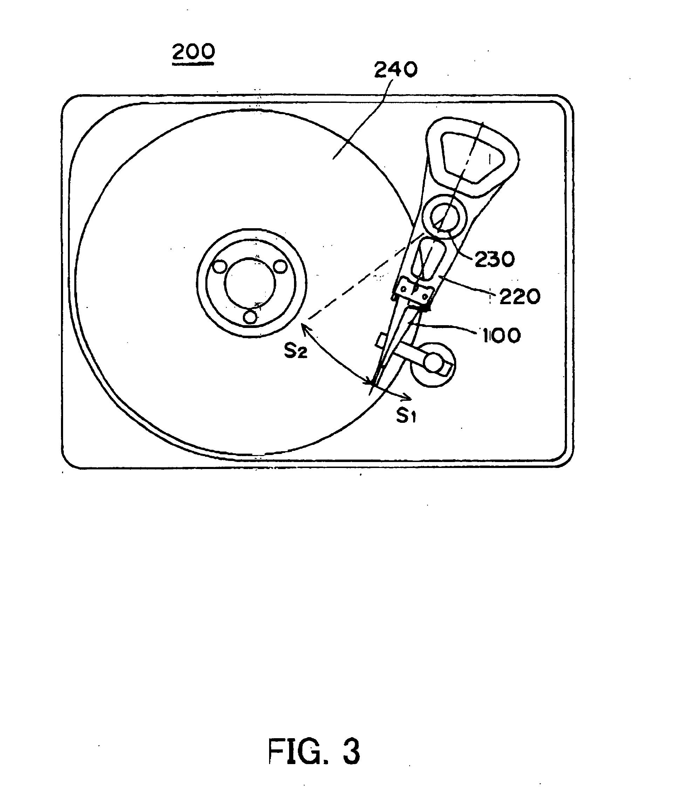

A description will now be given of a suspension 100 and a disc unit 200 having the suspension 100 of one embodiment according to the present invention, with reference to FIGS. 1 to 3. FIG. 1 is a schematic perspective vidw of the suspension 100. FIG. 2 is an exploded perspective view of the suspension 100. FIG. 3 is a schematic plane view of an internal construction of a disc unit 200 that includes the suspension 100. In each figure, those elements which are the same are designated by the same reference numerals, and a duplicated description thereof will be omitted. The same reference numerals with an alphabetic letter attached thereto generally designate a variation of the elements identified by the reference numeral without an alphabetic letter, and reference numerals without an alphabetic letter, unless otherwise specified, comprehensively designate the element identified by the reference numerals with an alphabetic letter.

As best shown in FIG. 2, the suspension 100 is a Watlas type suspension that includes a load beam 110, a dimple 125, and a flexure 130. The load beam 110 is connectible to a head arm 220 shown in FIG. 3, and compresses the head 210 against the disc 240 with a predetermined compression force. The flexure 130 supports the head 210. The dimple 125 is a projection that enables the load beam 110 to point-contact the flexure 130, and the head 210 to pitch and roll around the dimple 125.

The load beam 110 is an approximately triangular plate member, and a side of the connection section 112 is exemplarily wider than the side of the balancer section 116. Preferably, the load beam 110 is made of elastic members, such as stainless ("SUS"). The instant embodiment makes the load beam 110 of SUS 304. The load beam 110 includes, as shown in FIG. 2, a connection section 112, a spring section 114, a rigid section 116, and a balancer section 120 in a direction $X_2$ to $X_1$.

The connection section 112 is located at a proximal end of the suspension 112, which is part attachable to the head arm 220. The connection section 112 has an area that may stably connect the load beam 110 to the arm 220. The connection section 112 attached to the head arm 220 is rigid in a direction Z, *i.e.*, directions $Z_1$ and $Z_2$, in which a Z height fluctuates, which is a distance between the head arm 220 and the disc 240 as will be described later, and has a resonance frequency of about 1800 Hz. The connection section 112 is attached to the arm 220 using, for example, a screw.

The spring section 114 is an elastically deformable flab spring that extends from the connection section 112 in the direction $X_1$. The spring section 114 applies a certain sufficient compression force, such as about 20 mN, to the head 210 against the disc 240 so that the mass of the head 210, such as about 15 mg, does not affect the flying height. The spring section 114 has a resonance frequency of about 300 Hz, and has, for example, a flat plate shape. However, this shape is exemplary and non restrictive if it may apply the above compression force. For example, the spring section 114 has a shape having a curvature bending and inclining a top of the load beam 110 (or a side of the balancer section 120) to the side of the disc 240, a shape having a neck in the direction Z, or a waveform shape.

The spring section 114 has a certain sized opening 115 at its center. The size of the opening 115 is determined by the elasticity of the spring section 114. The opening 115 is made large for high elasticity, while the opening 115 is made small for low elasticity. It is optional to provide an opening 115, and the opening 115 may be omitted if the spring section 114 may serve as the flat spring without the opening 115.

A provision of the opening 115 at the center of the spring section 114 would reduce its rigidity, and use of its elasticity (or a SUS material) enables the spring section 114 to serve as a flat spring with a certain spring pressure. Since the spring section 114 has the above curvature, when the force is applied in the direction $Z_2$ to the top of the load beam 110 at the side of $X_1$ or the balancer section 120, the load beam 110 repulses in the direction $Z_1$ due to the spring pressure of the spring section 114. Therefore, a balance between the compression force applied by the spring section 114 and the floating force of the head 210 associated with a rotation of the disc 240 maintains the flying height of the head 210 from the disc 240 to be constant.

The rigid section 116 extends from the spring section 114 in the direction $X_1$, and is more rigid than the spring section 114 in the direction Z. A pair of rib sections 117 that are formed by bending both ends of the rigid section 116 enhance the rigidity of the rigid section 116. The rigid section 116 with these rib sections 117 has an approximately U-shape section when viewed from the direction $X_2$. The rigid section 116 effectuates the compression force by the spring section 114, and prevents the load beam 100 from easily twisting.

A shape and structure of the rigid section 116 are not limited if they may enhance the rigidity of the load beam 110. For example, whether the rigid section 116 has the rib section 117 is optional, and the rib section 117 may be omitted when the rigid section 116 is made of a highly rigid material in forming the load beam 110. Alternatively, one or more flat plates each having the same shape as that of the rigid section 116 may be piled on the rigid section 116, or a rod member may be arranged as a reinforcing member at the rigid section 116.

The balancer section 120 is located at the side adjacent to the rigid section 116 in the direction $X_1$, and located at an end opposite to the connection section 112 of the load beam 110. The balancer section 120 has approximately the same area as or slightly larger area than the head 210. The rib sections 117 formed at the rigid section 116 do not extend to the balancer section 120.

As discussed, the balancer section 120 is not provided with the rib sections 117 as on the rigid section 116, and exposes its elastic feature more remarkably than the balancer section 120. Therefore, when the load beam 100 twists and the rigid section 116 twists, the elastic feature absorbs torsion and the balancer section 120 is less affected by the propagated torsion. In other words, the reduced rigidity at the tip of the load beam 110 would prevent the torsion from transmitting to the balancer section 120, and reduce the influence of the torsion, such as swing, on the head 210 above the balancer section 120.

The thus structured load beam 110 of the inventive suspension 100 controls actions of the head 210 in the direction Z. For example, the inventive load beam 110 obtains the compression force from the spring pressure by the spring section 114, and may flexibly deform on a few concaves and convexes on the surface of the disc 240. The rigid section 116 would make rigid actions of the load beam 110 in other axes. The inventive load beam 110 is provided with the balancer section 120 at its tip, may absorb torsion generated in the load beam 110, and prevents the torsion from transmitting to the head 210.

The dimple 125 is located as an approximately trigonal pyramid projecting toward the disc 240 at an approximately center of the balancer section 120 in this embodiment. The dimple 125 supports the flexure 130 at its projection tip, and provides the head 210 mounted on the flexure 130 with a degree of freedom of pitching and rolling. More specifically, this structure enables the dimple 125 to point-contact the flexure 130. Therefore, the flexure 130 and the balancer section 120 have relative degree of freedom around the tip of the dimple 125. When the head 210 floats from the disc 240, the load beam 100 swings around the contact with the flexure 130 even when the torsion is applied to the load beam 100, thereby preventing the influence of the torsion from transmitting to the head 210. The dimple 125 has an exemplary cone shape in this embodiment, but the dimple 125 may be shaped like a semi-sphere that provides a freedom to the head 210.

The flexure 130 is a plate member made of a flat plate, and typically includes a head mounting section 132. The flexure 130 is located at the side of the top surface 111 of the load beam 110 so that the head mounting section 132 is located on the dimple 125 on the balancer section 120. It is basically sufficient that the flexure 130 has an area enough to mount the head 210, but the instant embodiment provides the flexure 130 with an elongated section 138 that extends in the direction $X_2$. The flexure 130 in this embodiment has a wiring pattern 134 on the elongated section 138. However, the flexure 130 does not necessarily include the elongated section 138 and wiring pattern 134, and this structure is illustrative. The flexure 130 in the instant embodiment is made of the same stainless material, or SUS304, as that of the load beam 110.

The flexure 130 is located between the head 210 and the dimple 125, and serves as a bottom plate that arranges the head 210 on the dimple 125. The flexure 130 in the instant embodiment serves as a printed board of the electric wiring 136 that is connected to the head 210 on the above elongated section 138.

The head mounting section 132 has approximately the same area as the head 210, and located at the top of the flexure 130 at the side of $X_1$. The head mounting section 132 may mount the head 210 onto the flexure 130. The head mounting section 132 includes a terminal connection section 133 that electrically connects the head 210 provided in the head 210 and the wiring pattern 134 to each other. The terminal connection section 133 is connected to an end of the wiring pattern 134 and the head 210 when the head 210 provided with the head 210 is mounted on the head mounting section 132. The head mounting section 132 includes a projection contact section 139 at an approximately center of the head mounting section 132 on a center axis (indicated by a dotted line in FIG. 2). The projection contact section 139 contacts the dimple 125 on the balancer section 120 under the rear surface of the flexure 130 when the flexure 130 is located on the load beam 110. The projection contact section 139 may be one point on the head mounting section 132, or a dent that is engaged with the top of the dimple 125.

The wiring pattern 134 is an aggregate of plural wires 136, and formed on the elongated section 138 at the side of the top surface 131 of the flexure 130. One end of the wiring 136 is located at the terminal connection section 133 on the head mounting section 132. The other end of the wiring 136 extends from the flexure 130 and is connected to the controller 250. The wiring pattern 134 may use any technology known in the art, and a detailed description will be omitted. The above wiring pattern 134 does not have to be printed on' the elongated section 138 on the flexure 130, and the elongated section 138 may be omitted and the wiring 136 may be printed on the top surface 111 on the load beam 110.

The suspension 100 arranges the flexure 130 on the top surface 111 on the load beam 110, and the head 210 and head core, which will be described later, are located on the head mounting section 132 on the top surface 131 of the flexure 130. It is understood that the head cote is so small that it is not illustrated in the drawing. The suspension 100 is formed symmetrical with respect to a dotted line shown in FIG. 1 so as to prevent the suspension 100 from twisting. The suspension 100 is connected to the head arm 230 of the disc unit 200, which will be described later, at the side of the top of the slider 122 or the side in the direction $X_1$. The suspension 100 serves to compress the head 210 against the disc 240 in the direction $Z_1$, balance the floating force, and maintain the interval between the slider 120 and the disc 240 to be constant.

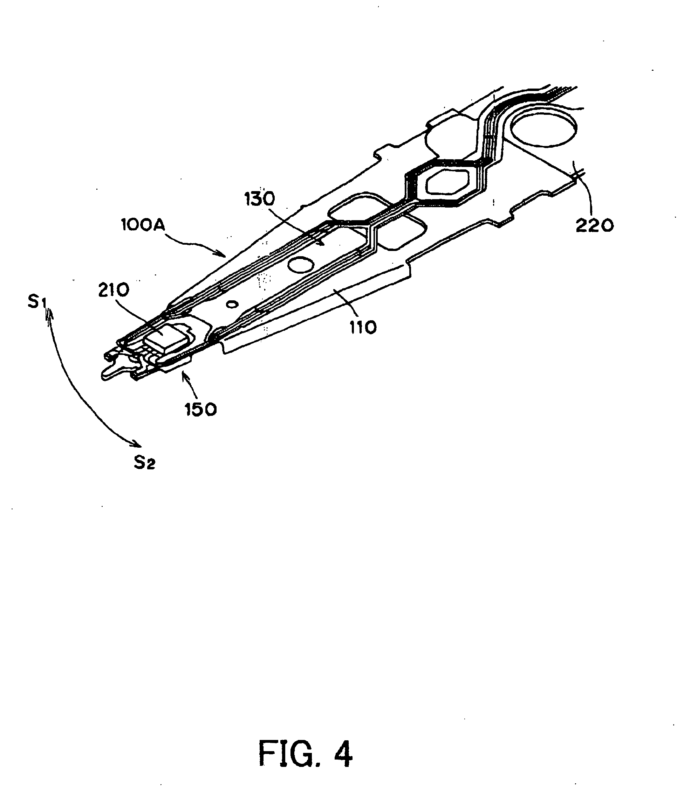

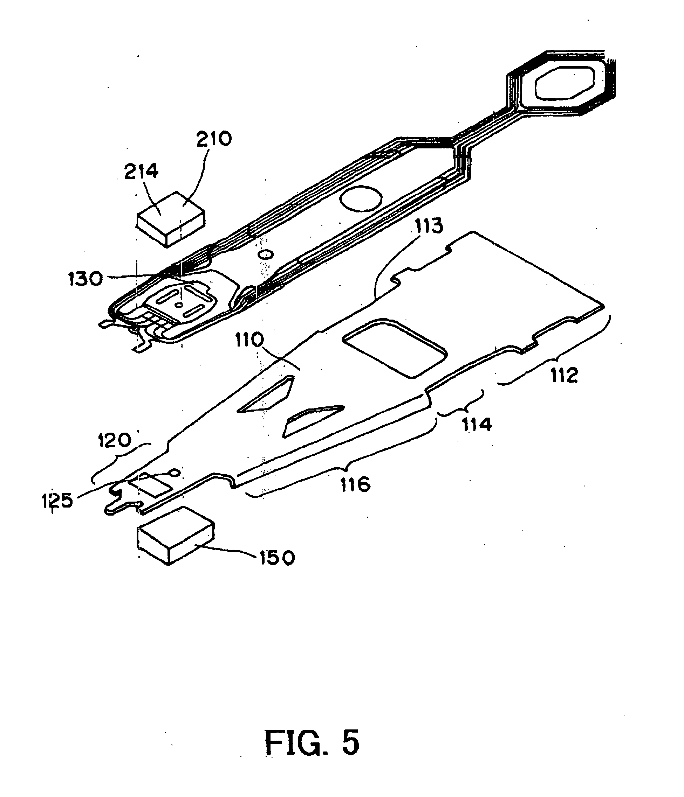

Referring now to FIGS. 4 and 5, a description will be given of a suspension 100A as a variation of the inventive suspension 100. Here, FIG. 4 is schematic perspective view of the suspension 100A as a variation of the suspension 100 shown in FIG. 1. FIG. 5 is a schematic perspective view of the hierarchical structure of the suspension 100A shown in FIG. 4. The suspension 100A has: basically the same structure as the suspension 100, but is different from the suspension 100 in that it has a weight 150. Other than that, it is the same as the suspension 100A, and a detailed description will be omitted. The suspension 100A serves to more effectively prevent the torsion of the suspension 100 associated with seeking.

The weight 150 has a certain mass "m", and is located opposite to the dimple 125 of the balancer section 120. The weight "m" of the weight 150 is set for weight balance of the balancer section 120, as described later. The weight 150 is located just below the vicinity of the head 210. A shape of the weight 150 is not limited if it may be arranged on the balancer section 120. The weight 150 serves to maintain the weight balance of the balancer section 120.

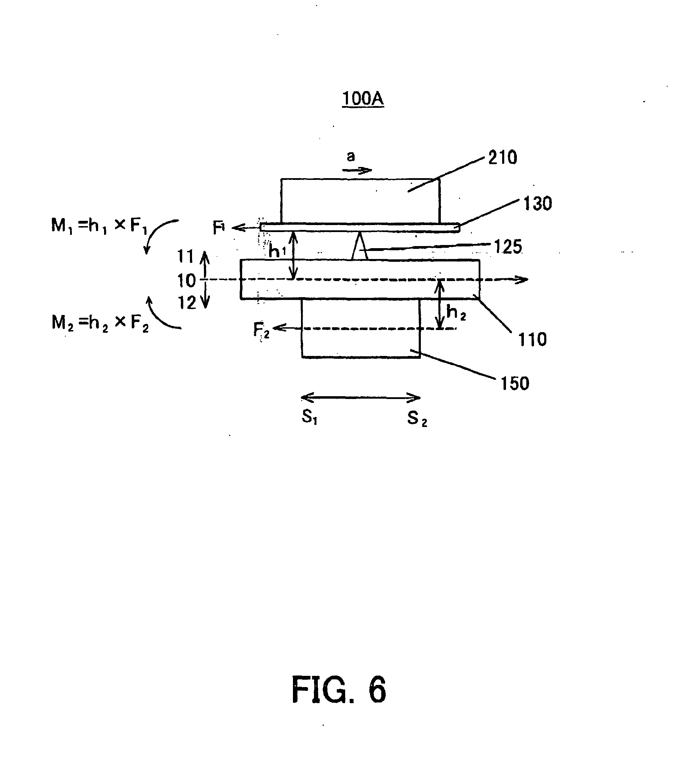

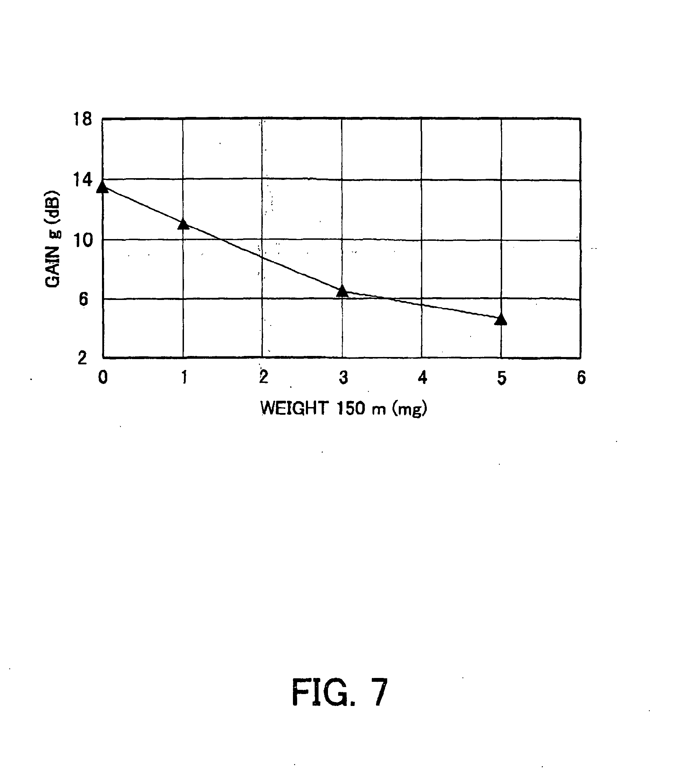

Referring to FIG. 6, a retailed description will be given of this function. Here, FIG. 6 is a view for explaining a function of the weight 150 of the suspension 100A shown in FIG. 4. The suspension 100A is excited in a direction S (that generalizes directions $S_1$ and $S_2$) associated with seeking. For example, when it is exited in the direction $S_2$ by a force F (with acceleration a), the bending moment ocours at the top surface 11 and rear surface 12 associated with the force F with respect to the excitation reference axis 10 as a basis. The excitation reference axis 10 is an axis through which the force F affects the load beam 110, and determined by an arrangement among the spring section 110, rigid section, and a Z height indicative of a position of the head 210. The Z height is a height of the head 210 from a contact surface between the load beam 110 and the arm 220 to a disc surface 211. An inertia force $F_1$ (mass "$m_5$" of the slider applied to the dimple 125 times "a") near the top of the dimple 125 causes a bending moment $M_1$ ($F_1 \cdot h_1$ as a height from the excitation reference axis 10 to the tip of the dimple 125) on the top surface 11 at the upper side of the excitation reference axis 10. An inertia force $F_2$ (mass "m" of the weight 150 times "a") near the center of gravity of the weight 150 causes a bending moment $M_2$ ($F_2 \cdot h_2$ as a height from the excitation reference axis 10 to the weight 150) on the rear surface 12 at the lower side of the excitation reference axis 10. When there is no weight 150, $M_2 = 0$ (N·m) and only the bending moment $M_1$ occurs on the balancer section 120. The balancer section $M_1$ causes the torsion of the balancer section 120. A provision of the weight 150 would result in the bending moment $M_2$ opposite to the bending moment $M_1$. When the mass "m" of the weight 150 is set so that $M_1 = M_2$, the torsion of the balancer section 120 may be made small. $M_1 = M_2$ may be satisfied by varying a shape of the weight 150 and setting a value of $h_2$. The instant specification refers to balanced moments with respect to the excitation reference axis 10 as the weight balance. Referring to FIG. 7, it is understood that the increased weight "m" of the weight 150 would increase the bending moment $M_2$ opposite to the moment $M_1$ and decrease the gain. Here, FIG. 7 is a graph that indicates a swinging degree of the head 210 to the weight "m" of the weight 150 obtained using the finite element method analysis in the suspension 100 shown in FIG. 4. In FIG. 7, the abscissa axis is the weight "m" (mg) of the weight 150 while the ordinate axis is a gain "g" (dB). The gain is a value indicative of the swinging degree, which indicates that the larger the value is, the larger the swing is. The gain is given by the following equation:

$$g = \log\left(\frac{n_2}{n_1}\right) \times 20 \quad (\text{dB}) \qquad\qquad (1)$$

When the equation (1) is applied to the instant embodiment, $n_1$ is a swing width applied to the suspension 100A, and $n_2$ is a swing width of the head 210 corresponding to a swing of $n_1$. As discussed, the weight balance of the balancer section 120 would decrease the gain and prevent the torsion.

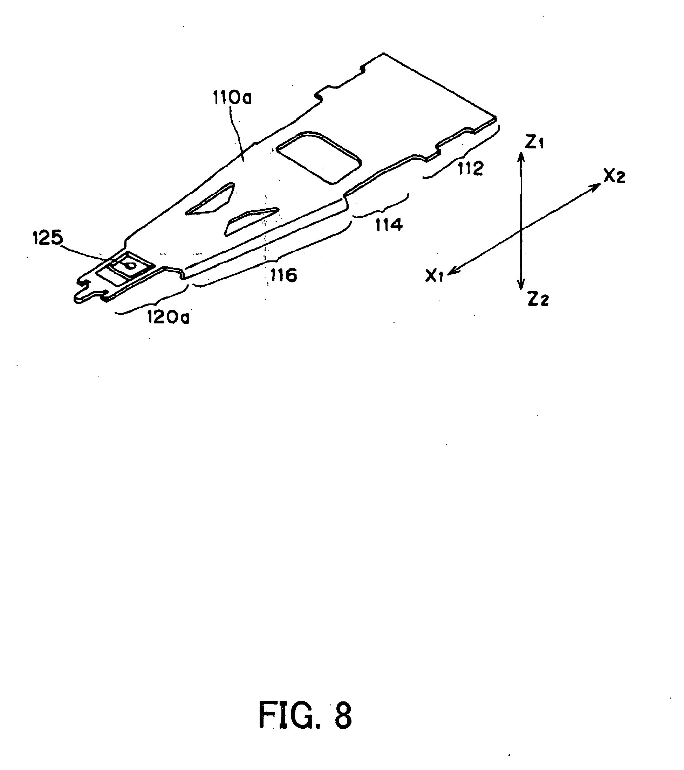

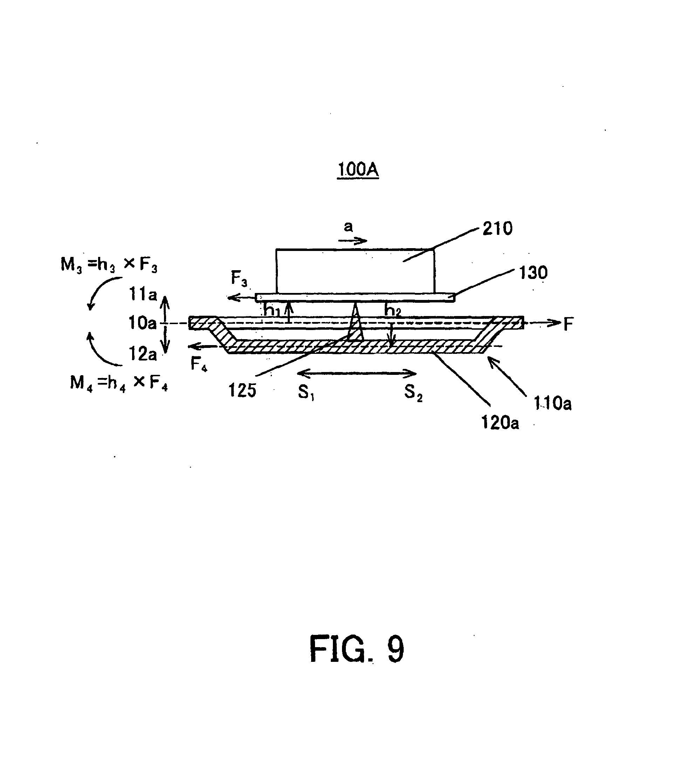

The instant embodiment uses the weight 150 to realize the weight balance of the balancer section 120, but the present invention is not limited to this embodiment. No weight 150 is needed if there is a weight balance of the balancer section 120. For example, as shown in FIGs. 8 and 9, the balancer section 120a that is formed lower in the direction $Z_2$ than the body of the load beam 110 would maintain the weight balance. Here, FIG. 8 is a schematic perspective view of the load beam 110a as a variation of the load beam 110 in the suspension 100A shown in FIG. 4. FIG. 9 is a view for explaining weight balancing of the balancer section 120a when the load beam 110a shown in FIG. 8 is applied to the suspension 100A. Referring to FIG. 9, the balancer section 120a secures the weight balance when a bending moment $M_3$ ($F_3 \cdot h_3$) that occurs at the side of the top surface 11 a of the excitation reference axis 10a balances a balancing moment $M_4$ ($F_4 \cdot h_4$) that occurs at the side of the rear surface 12a.

As apparent from this structure, the weight balance of the balancer section 120 requires a balance between the upper and lower moments with respect to the excitation reference axis. The upper and lower moments with respect to the excitation reference axis may balance using the weight 150 as in the above structure, or the modified shape of the balancer part 120. On the other hand, a position of the excitation reference axis 10 relatively changes when an arrangement among the spring section 114, the rigid section 116 and the Z height changes. Therefore, a displacement of any one of the spring section 114, the rigid section 116 and the Z height would realize the weight balance of the balancer section 120, and this method also may prevent the torsion.

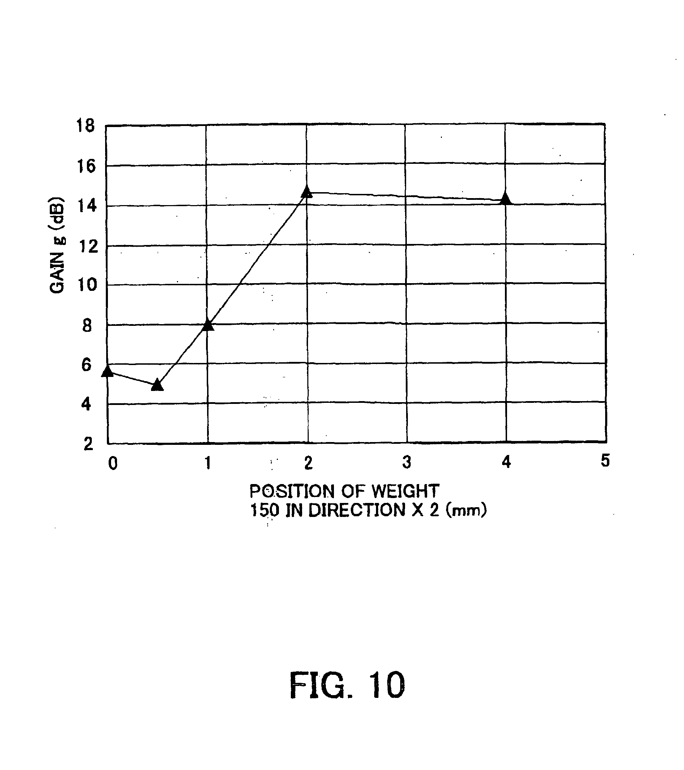

Referring now to FIG. by when the weigh 150 is spaced from the head 210 in the direction $X_2$, the gain of the head 210 increases. FIG. 10 is a graph that indicates a swinging degree of the head 210 obtained using the finite element method analysis when the weight 150 of the suspension 100 shown in FIG. 4 moves in the direction $X_2$. In FIG. 10, the abscissa axis is a position (mm) of the weight 150 in the direction $X_2$ while the ordinate axis is a gain "g" (dB). The abscissa axis is a position where the weight 150 and the head 210 have the same center of gravity, and a displacement of the abscissa axis corresponds to a moving distance of the weight 150 in the direction $X_2$. Understandably, it is preferable that the weight 150 is located below the head 210 and its vicinity (e.g., 0 to 0 5 mm) via the balancer section 120.

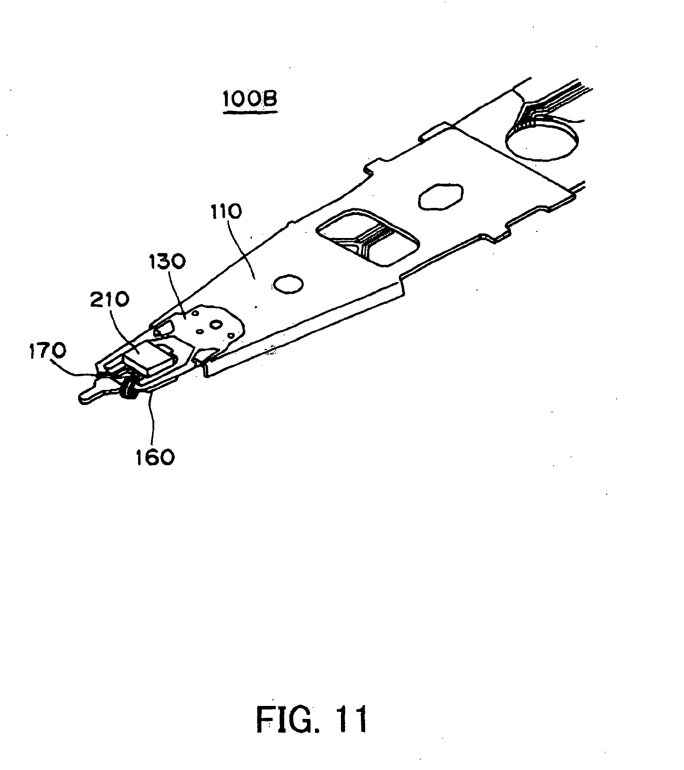

Referring now to FIGs. 1-5, a description will be given of a suspension 100B as a variation of the inventive suspension 100. Here, FIG. 11 is a schematic perspective view of the suspension 100B as a variation of the suspension 100 shown in FIG. 1. FIG. 4 is a schematic perspective view of the suspension 100B shown in FIG. 11 then viewed from the rear side FIG. 5 is a schematic perspective view of the hierarchical structure of the suspension 100B shown in FIG. 11.

The suspension 100B uses the preamp IC 160 instead of the weight 150 of the suspension 100A. The preamp IC is a circuit to amplify an electronic signal. Similar to the weight 150, the suspension 100B uses the preamp IC 160 and maintains the weight balance of the balancer section 120, and improves the electric characteristic to the head 210. Other than that, the suspension 100B is not different from the suspension 100A with respect to operations and functions. Therefore, a description will be given of only differences from the suspension 100A.

Referring now to FIG. 5, the preamp IC 160 and the head 210 are located opposite to each other with respect to the balancer section 120. Similar to the weight 150 the preamp IC 160 is located at a position enough for the weight balance. The electric wiring is arranged on the rear surface 113 of the load beam 110 to connect the head 210 through the preamp IC 160. The suspension 100B of the instant embodiment uses an FPC 170 for electric wiring. The FPC 170 extends from the direction $X_2$ to the direction $X_1$ on the rear surface 113 of the load beam 110, and folded back at the top of the load beam 110 to the side of the upper surface 111 and connected to the terminal connection section 133 of the head mounting section 132. This structure may shorten a distance between the terminal connection section 133 connected to the head 210 and the preamp IC 160, and effectively responds to a feeble signal from the head 210.

Since the preamp IC 160 is located at a position corresponding to the above weight 150, a preamp IC contact section 172 is formed in this position of the FPC 170. The preamp IC contact section 172 is provided with a pair of terminals 173 electrically connected to the preamp IC 160. The preamp IC 160 is electrically connected to the FPC 170 by attaching the preamp IC contact section 170 to the preamp IC 160. This structure enables the preamp IC 160 to amplify an electric signal from the head 210 and works similar to the weight 150.

Alternatively, as shown in FIG. 6, the electric wiring is printed on the rear surface 113 of the load beam 110 to the preamp IC 160 as shown in FIG. 6, and the FPC 170a may be used for part from the preamp IC 160 to the head 210, which requires folding back. Here, FIG. 6 is a schematic perspective view of a hierarchical structure of the suspension 100B when the FPC 170 shown in FIG. 5 is replaced with the FPC 170a as a variation. This structure is advantageous in that the FPC 170a is less damaged in assembly using the short FPC 170a.

Alternatively, as shown in FIG. 7, a through-hole 123 provided in the balancer section 120 may serve to fold back the electric wiring from the preamp IC 160 to the head 210. Here, FIG. 7 is a schematic perspective view of the suspension 100B provided with the through-hole 123. This structure uses ashort distance between the preamp IC 160 and the head 210, effectively responds to a feeble signal from the head 210 and advantageously improves the electric characteristics.

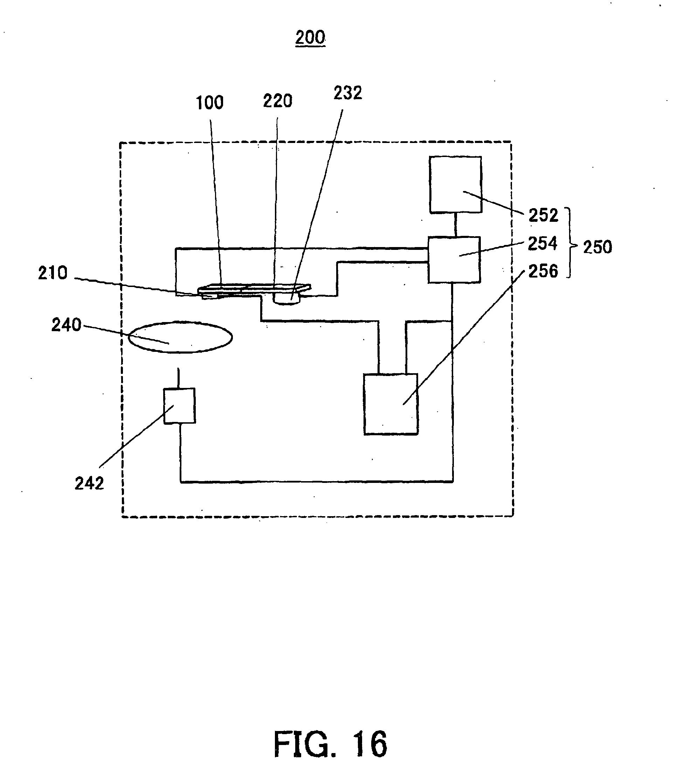

Referring to FIGS. 3 and 16, a description will be given of a disc unit 200. Here, FIG. 16 is a view of the controller 250 in the disc unit 200 shown in FIG. 3. The disc unit 200 includes the suspension 100, the head 210, the arm 220, the arm shaft 230, the disc 240, and the controller 250. The disc unit 100 connects the arm 220 to the arm shaft 230 located bear the disc 240, and provides the suspension 100 at the top of the arm 220. The head 210 is attached to the head 210 of the suspension 100. A type of disc unit that floats the slider may use a contact start stop ("CSS") manner in which the head lands when the disc stops and takes off when the disc starts rotating, and a ramp load manner in which the head retreats on a ramp located outside when the disc stops, but these manners do not limit the inventive disc unit 200.

The suspension 100 may use any one of the above structures, and a detailed description will be omitted.

The head 210 is a magnetic head, and includes a disc facing surface 211 that faces the disc 240, and a mounted surface 212 that faces the head mounting section 132. This mounted surface 212 is located at the side of the flexure 130, and arranged on the head mounting section 132 of the flexure 130. The head 210 is located on the head mounting section 132 so that the center of gravity of the head 210 accords with the projection contact section 139 in the direction Z. This structure enables the center of gravity of the head 210 to be located on the dimple 125, and the compression force by the load beam 110 is uniformly applied to the head 210.

The head 210 includes a slider 214 and a head core (not shown). The slider generates a certain dynamic pressure due to the airflow along with a rotation of the disc 240, serves to always maintain the certain flying height with warps and heave of the rotating disc. The head 210 includes a horceshoe magnetic circuit wound by a coil for signal recording and reproducing, and magnetizes the disc 240 with a magnetic flux generated by the coil. According to shapes of the head core, the head 210 is typically classified into three types including a monolithic (referred to as bulk technology) that includes a horceshoe head core and wire winding, a composite type, and a thin film type that uses thin film technology to form winding and a head core. The monolithic type makes the slider 214 and head core of ferrite as mixed oxide including manganese, zinc, and iron, while the composite type includes a composite of ferrite head core and ceramics slider. of course, the present invention is not limited to these structures, and may use any shape for the head 210. The head 210 may use any technology known in the art, and a detailed description thereof will be omitted in this specification.

The arm 220 supports the suspension 100 and connects it to the rotary shaft 230. The arm 220 is an approximately sector plate. Of course, this shape is exemplary, and the arm 220 may use any shape. The arm 220 moves the magnetic head slider 230 to a target position on the disc 240 in cooperation with the arm shaft 230. The arm 220 may be integrated with the arm shaft 230, which will be described later.

The arm shaft 230 is located near the disc 240, and connected to the arm 220. The arm shaft 230 serves to enable the arm 220 and the head 210 located at the top thereof with seek on the disc 240. The arm shaft 230 rotates the arm 220 using a drive unit 232 that includes, for example a coil and a permanent magnet for electromagnetic driving. This configuration is exemplary, and the drive unit for moving the arm 220 may use any structure. The arm shaft 230 may use a linear type that reciprocates the head in a direction parallel to the shaft of the suspension 100, and a swing arm type that draws an arc. The inventive disc unit 100 is suitable for the swing arm type, but does not exclude the linear type. In seek action, the arm shaft 230 moves the head 210 to a target position under instructions by the control section 250.

The disc 240 is connected rotatably to the motor 242. The disc 240 is molded from aluminum alloy or glass plate, and evaporated magnetic materials on its surface. The disc unit 200 for use with a desktop personal computer ("PC") would use the disc 240 with a diameter of a typically 3.5 inches. However, the disc 240 is not limited to this diameter, and may use 2.5 inches for laptop PCs or exceptional 5 inches. Although FIG. 3 shows only one disc 240, plural discs may be stacked up. Thus, the inventive disc unit 200 does not exclude a disc unit that uses plural discs.

The disc 240 may record data when the head 210 magnetizes the magnetic materials. The disc 240 includes plural tracks that concentrically or spirally divide the disc surface, and plural sectors that divide the tracks in a radial direction. The disc 240 arranges as a minimum unit a cluster that includes plural sectors as one unit for efficient recording.

Referring to FIG. 8, the control section 250 includes, for example, a memory 252, a control circuit 254, and a signal processor 256. Here, FIG. 8 is a view of the control section 250 in the disc unit shown in FIG. 3. The control circuit 254 controls operations of the head 210, the drive unit 232, the motor 242, and the signal processor 256 under control of firmware stored in the memory 252. The control section 250 reads data from the disc 240 via the head 210, and sends it to the signal processor 256. The signal processor 256 is connected to an interface of an external apparatus (not shown), such as a SCSI interface, demodulates data, picks up the original data, and sends it to the external apparatus. The signal processor 256 receives data to be recorded onto the disc, from the external apparatus, and writes the data onto the disc 240 through the head 210.

In operation, the disc unit 200 uses the control circuit 254 in the control section 250 to drive the motor 242 and rotate the disc 240. The disc unit 200 forms a fine air film between the head 210 and disc 240 using an airflow associated with a rotation of the disc 240, and floats the head 210 from the disc 240 surface. The suspension 100 compresses the head 210 with a spring pressure of the suspension 100 in a direction opposite to the floating force of the head 210. These two forces balance, and maintain a distance to be constant between the head 210 and the disc 240. Then, the control section 250 controls the drive unit 232 for the arm shaft 230, rotates the arm 220 and suspension 100, and moves the head 210 to a target track on the disc 240. Then, the head 210 reads data from the target track and send it to the signal processor 256 or writes data received from the signal processor 256, into the target track.

Further, the present invention is not limited to these preferred embodiments, and a various variations and modifications may be made without departing from the spirit and scope of the present invention.

INDUSTRIAL APPLICABILITY

The inventive suspension absorbs the generated torsion at the balancer section that is more elastic than the rigid section, and the torsion does not propagate to the head in the balancer section. A structure that provide a weight approximately below the head with respect to the balancer section, and a structure that bends and spaces the balancer section from the disc may mechanically stabilize the weight balance of the balancer section, and effectively reduce the torsion. Moreover, use of the preamp IC for the weight would be able to improve the electric characteristics.

**Claims**

1. A suspension comprising:

   a load beam that connects a head to a head arm, the head recording data onto and reproducing data from a disc, the head arm moving to position the head to a target position on the disc, said load beam compressing the head against the recording medium with a certain compression force;
   a flexure that supports the head; and
   a dimple as a projection that enables said load beam to point-contact said flexure, and the head to pitch and roll around the dimple,

   wherein said load beam includes:

   a spring section at applies the compression force;
   a rigid section that extends from the spring section to a side opposite to the head arm, and is more rigid than the spring section in a direction, in which a distance between the head arm and the disc fluctuates; and
   a balancer section connected to the dimple and more elastic than the rigid section in the direction, the balancer section extending from the rigid section to a side of the rigid section opposite to the spring section.

2. A suspension according to claim 1, further comprising a weight provided to the balancer section.

3. A suspension according to claim 2, wherein the weight is located approximately symmetrical to the head with respect to the balancer section.

4. A suspension according to claim 1, wherein the balancer section is formed and bent in a direction to space said rigid section from the disc.

5. A suspension comprising:

   a load beam that connects a head to a head arm, the head recording data onto and reproducing data from a disc, the head arm moving to position the head to a target position on the disc, said load beam compressing the head against the recordable medium with a certain compression force;
   a flexure that supports the head;
   a dimple as a projection that enables said load beam to point-contact said flexure, and the head to pitch and roll around the dimple; and
   a preamp chip, connected to the load beam, which amplifies a signal to be sent to the head,

   wherein said load beam includes:

   a spring section that applies the compression force;
   a spring section that applies the compression force;
   a rigid section that extends from the spring section to a side opposite to the head arm, and is more rigid than the spring section in a direction in which a distance between the head arm and the disc fluctuates; and

a balancer section connected to the dimple and preamp chip, and more elastic than the rigid section in the direction, the balancer section extending from the rigid section to a side of the rigid section opposite to the spring section.

6. A suspension according to claim 5, wherein said preamp chip is located approximately symmetrical to the head with respect to the balancer section.

7. A suspension according to claim 5, further comprising wiring that electrically connects said preamp chip to the head at a side of said load beam opposite to the disc.

8. A suspension according to claim 7, wherein the balancer section includes a through-hole, through which the wiring is electrically connected to the head.

9. A suspension comprising:

a load beam that connects a head to a head arm, the head recording data onto and reproducing data from a disc, the head arm moving to position the head to a target position on the disc, said load beam compressing the head against the recording medium with a certain compression force;
a flexure that supports the head;
a dimple as a projection that enables said load beam to point-contact said flexure, and the head to pitch and roll around the dimple; and
a preamp chip, connected to said load beam, which amplifies a signal to be sent to the head,

wherein said preamp chip is located symmetrical to the head with respect to said load beam.

10. A disc unit comprising:

a head that records data onto and reproduces data from a disc;
a head arm that moves said head to a target position on the disc; and
a suspension, connected to said head arm, which supports said head;
said suspension includes:

a load beam that connects a head to a head arm, the head recording data onto and reproducing data from a disc, the head arm moving to position the head to a target position on the disc, said load beam compressing the head against the recordable medium with a certain compression force;
a flexure that supports the head;
a dimple as a projection that enables said load beam to point-contact said flexure, and the head to pitch and roll around the dimple; and
a preamp chip, connected to said load beam, which amplifies a signal to be sent to the head,

wherein said preamp chip is located symmetrical to the head with respect to said load beam.

FIG. 1

FIG. 2

FIG. 3

FIG. 4

**FIG. 5**

FIG. 6

FIG. 7

# FIG. 8

FIG. 9

FIG. 10

100B

110

130

210

170

160

FIG. 11

FIG. 12

FIG. 13

# FIG. 14

FIG. 15

<u>200</u>

FIG. 16

## INTERNATIONAL SEARCH REPORT

| | International application No. |
|---|---|
| | PCT/JP00/09081 |

A. CLASSIFICATION OF SUBJECT MATTER
    Int.Cl⁷   G11B21/21

According to International Patent Classification (IPC) or to both national classification and IPC

B.  FIELDS SEARCHED

Minimum documentation searched (classification system followed by classification symbols)
    Int.Cl⁷   G11B5/60, 17/32, 21/21

Documentation searched other than minimum documentation to the extent that such documents are included in the fields searched
    Jitsuyo Shinan Koho        1922-1996    Toroku Jitsuyo Shinan Koho  1994-2000
    Kokai Jitsuyo Shinan Koho   1971-2000    Jitsuyo Shinan Toroku Koho  1996-2000

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y1 | JP, 2000-315308, A (International Business Machines Corp.),<br>14 November, 2000 (14.11.00),<br>Full text; Figs. 1 to 11   (Family: none)<br>Full text; Figs. 1 to 11   (Family: none) | 1,4,8<br>2,3,5-7,9,10 |
| Y2 | Microfilm of the specification and drawings annexed to the request of Japanese Utility Model Application No. 152668 /1985 (Laid-open No. 61064 /1987) (NEC Corporation)<br>Full text; Figs. 1,2 | 2,3 |
| Y2 | JP, 2-199609, A (Sumitomo Metal Industries, Ltd.),<br>08 August, 1990 (08.08.90),<br>Full text; Fig. 1   (Family: none) | 5-7,9,10 |
| A | JP, 9-128910, A (Fujitsu Limited),<br>16 May, 1997 (16.05.97),<br>Full text; Figs. 1 to 6   (Family: none) | 1-10 |

☐  Further documents are listed in the continuation of Box C.      ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    27 March, 2001 (27.03.01) | Date of mailing of the international search report<br>    10 April, 2001 (10.04.01) |
|---|---|
| Name and mailing address of the ISA/<br>    Japanese Patent Office | Authorized officer |
| Facsimile No. | Telephone No. |

Form PCT/ISA/210 (second sheet) (July 1992)